# EUROPÄISCHE PATENTSCHRIFT

(11) **EP 0 584 398 B1**
(45) Veröffentlichungstag und Bekanntmachung des Hinweises auf die Patenterteilung: **07.01.1998**
(21) Anmeldenummer: 92114798.9
(22) Anmeldetag: 28.08.1992
(51) Int. Cl.: H04L 12/56

(54) **Verfahren und Schaltungsanordnung zum Übertragen von Nachrichtenzellen innerhalb eines ATM-Netzes**
Method and circuit for transmitting information cells within an ATM network
Procédé et circuit pour transmettre des cellules d'information dans un réseau ATM

(43) Veröffentlichungstag der Anmeldung: 02.03.1994
(73) Patentinhaber: SIEMENS AKTIENGESELLSCHAFT, 80333 München (DE)
(72) Erfinder: Rau, Peter, Dr. Dipl.-Phys., W-8000 München 60 (DE)

(56) Entgegenhaltungen:
- EP-A- 0 355 797
- EP-A- 0 384 936
- EP-A- 0 471 380

## Beschreibung

Die Erfindung betrifft ein Verfahren und eine Schaltungsanordnung gemäß Oberbegriff des Patentanspruches 1 bzw. des Patentanspruches 3.

Es ist bereits ein Verfahren zum Weiterleiten von auf Zubringerleitungen im Zuge von virtuellen Verbindungen nach einem asynchronen Übertragungsverfahren übertragenen Nachrichtenzellen, die jeweils einen die jeweilige virtuelle Verbindung bezeichnenden Zellenkopf aufweisen, über eine wenigstens zwei redundante Koppelvielfache aufweisende Zellenvermittlungseinrichtung zu mit dieser verbundenen Abnehmerleitungen hin bekannt (europäische Patentanmeldung EP-A-0 384 936). Bei diesem bekannten Verfahren wird für jede der auf einer der Zubringerleitungen im Zuge einer virtuellen Verbindung übertragenen Nachrichtenzellen durch Vermehrfachen eine Nachrichtenzellen-Gruppe mit einer der Anzahl der redundanten Koppelvielfache entsprechenden Anzahl von identischen Nachrichtenzellen gebildet. In den Zellenkopf jeder der Nachrichtenzellen einer Nachrichtenzellen-Gruppe wird dabei eine identische, für aufeinanderfolgende Nachrichtenzellen-Gruppen sich ändernde Zusatzkennung in Form einer fortlaufend vergebenen Nachrichtenzellen-Folgenummer eingetragen. Anschließend werden die Nachrichtenzellen einer Nachrichtenzellen-Gruppe getrennt über die redundanten Koppelvielfache in Richtung zu der für die jeweilige virtuelle Verbindung in Frage kommenden Abnehmerleitung hin übertragen. Nach einer solchen Übertragung über die redundanten Koppelvielfache wird schließlich anhand der den Nachrichtenzellen jeweils beigefügten Zusatzkennung lediglich eine der zu einer Nachrichtenzellen-Gruppe gehörenden Nachrichtenzellen an die in Frage kommende Abnehmerleitung weitergeleitet.

Darüber hinaus ist bereits ein Verfahren zur Vermittlung von Nachrichtenzellen eines einen Nachrichtenzellenstrom nach einem asynchronen Übertragungsverfahren transportierenden Übertragungssystems über ein mit Moduln aufgebautes Koppelfeld vorgeschlagen worden (europäische Patentanmeldung EP-A-0 512 141). Die Transportbitrate des Übertragungssystems beträgt ein Mehrfaches der Übertragungsbitrate der Koppelelemente der Module. Zu vermittelnde Nachrichtenzellen werden dabei auf eine dem Mehrfachen entsprechende Anzahl von Koppelfeldeingängen jeweils unter Hinzufügen von Informationen verteilt. Diese Informationen bezeichnen alle diejenige Module, über die die jeweiligen Nachrichtenzellen zu einem Ausgang des Koppelfeldes durchgeschaltet werden sollen. Die zu verschiedenen Ausgängen übertragenen Nachrichtenzellen werden dann wieder zu einem Nachrichtenzellenstrom zusammengefaßt. Dabei ist u.a. vorgesehen, daß den Nachrichtenzellen vor der Durchschaltung durch das Koppelfeld verbindungsindividuell eine zyklisch fortlaufende Folgenummer hinzugefügt wird, anhand der bei der Zusammenfassung zu dem Nachrichtenzellenstrom die Reihenfolge der Nachrichtenzellen für jede Verbindung sichergestellt wird, und daß die Nachrichtenzellen auf die Koppelfeldeingänge zyklisch verteilt werden.

Es ist nun Aufgabe der vorliegenden Erfindung, einen Weg zu zeigen, wie ein Verfahren und eine Schaltungsanordnung der eingangs genannten Art ausgebildet werden können, um mit einer ersten Übertragungsbitrate auftretende Nachrichtenzellen innerhalb eines ATM-Netzes übertragen zu können, welches für eine gegenüber der ersten Übertragungsbitrate niedrigere Übertragungsbitrate ausgelegt ist.

Gelöst wird diese Aufgabe durch die im Patentanspruch 1 angegebenen Verfahrensmerkmale bzw. durch die im Patentanspruch 3 angegebenen schaltungstechnischen Merkmale.

Das Verfahren gemäß der vorliegenden Erfindung bringt dabei den Vorteil mit sich, daß Nachrichtenzellen zunächst depaketiert und die in diesen enthaltenen Nachrichtensignale signalabschnittweise in den Informationsteilen von neu gebildeten Nachrichtenzellen über eine Mehrzahl von Eingängen des ATM-Netzes übertragen werden und dabei für die Rückgewinnung der ursprünglichen Nachrichtenzellen erforderliche Zusatzinformationen in Form von Signalabschnitt-Folgenummern ausschließlich in den Informationsteilen der neu gebildeten Nachrichtenzellen, d.h. in dem eigentlichen Benutzerfeld dieser Nachrichtenzellen, eingefügt werden. Damit weisen diese Nachrichtenzellen hinsichtlich ihres jeweiligen Zellenkopfes keine Modifizierungen gegenüber den Zellenköpfen der übrigen über das ATM-Netz übertragenen Nachrichtenzellen auf, wodurch für die Übertragung der ursprünglichen Nachrichtenzellen innerhalb des ATM-Netzes kein zusätzlicher Steuerungsaufwand erforderlich ist. Vielmehr erfolgt nach einer Übertragung der Signalabschnitte enthaltenden Nachrichtenzellen eine Rückgewinnung von Nachrichtenzellen, die sowohl vom Inhalt als auch von der Reihenfolge her den ursprünglichen Nachrichtenzellen entsprechen, ausschließlich auf Benutzerebene, indem die in den Informationsfeldern der neu gebildeten Nachrichtenzellen übertragenen Signalabschnitt-Folgenummern ausgewertet werden.

Eine vorteilhafte Ausgestaltung des Verfahrens gemäß der vorliegenden Erfindung ergibt sich aus dem Patentanspruch 2. Der Vorteil dieser Ausgestaltung besteht dabei darin, daß es anhand von den Signalabschnitt-Folgenummern beigefügten Prüfinformationen und Längenkennzeichen in einfacher Weise möglich ist, Übertragungsfehler innerhalb des ATM-Netzes und die Länge des jeweiligen Signalabschnittes feststellen zu können.

Die vorstehend genannte Aufgabe wird bei einer Schaltungsanordnung der eingangs genannten Art durch die im Patentanspruch 3 angegebenen schaltungstechnischen Merkmale gelöst. Der Vorteil dieser Schaltungsanordnung besteht dabei in dem relativ geringen schaltungstechnischen Aufwand für die Übertragung von Nachrichtenzellen über ein für eine niedrigere Übertragungsbitrate ausgelegtes ATM-Netz und für die folgerichtige Rückgewinnung von Nachrichtenzellen unter Berücksichtigung von unterschiedlichen Laufzeiten von Nachrichtenzellen innerhalb des ATM-Netzes.

Im folgenden wird die vorliegende Erfindung anhand von Zeichnungen beispielsweise näher erläutert.
Figur 1 zeigt in einer schematischen Darstellung ein ATM-Netz, bei dem die Erfindung angewandt ist,
Figur 2 zeigt ein Diagramm, auf welches im folgenden noch näher eingegangen wird,
Figur 3 zeigt einen möglichen Aufbau einer der in Figur 1 lediglich schematisch dargestellten sendeseitigen Umpaketiereinrichtungen und
Figur 4 zeigt den möglichen Aufbau einer der in Figur 1 lediglich schematisch dargestellten empfangsseitigen Umpaketiereinrichtungen.

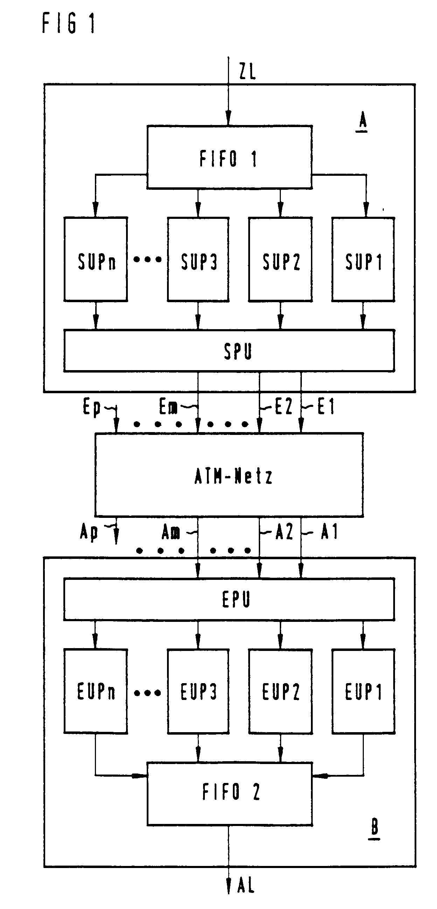

In Figur 1 ist ein nach einem asynchronen Übertragungsprinzip ("asynchronous transfer mode") arbeitendes ATM-Netz schematisch dargestellt, welches eine Mehrzahl von Eingängen sowie eine Mehrzahl von Ausgängen aufweisen möge. Die Eingänge und Ausgänge sind dabei jeweils für die Aufnahme bzw. Abgabe von einen Zellenkopf und einen Informationsteil aufweisenden Nachrichtenzellen mit einer festgelegten maximalen Übertragungsbitrate ausgelegt. An wenigstens eine festgelegte Anzahl von Eingängen E1,..., Em ist eine Behandlungseinrichtung A angeschlossen, die eingangsseitig mit einer Zubringerleitung ZL in Verbindung steht. Über diese Zubringerleitung erfolgt eine Übertragung von Nachrichtenzellen mit einer gegenüber der für die Eingänge und Ausgänge festgelegten Übertragungsbitrate höheren Übertragungsbitrate. Die Anzahl der mit der Behandlungseinrichtung A verbundenen Eingänge entspricht dabei dem Bitratenverhältnis der für die Zubringerleitung festgelegten Übertragungsbitrate zu der für die Eingänge und Ausgänge des ATM-Netzes festgelegten Übertragungsbitrate unter Berücksichtigung von noch zu erläuternden, innerhalb des ATM-Netzes zu übertragenden Zusatzinformationen.

Darüber hinaus ist an wenigstens eine festgelegte Anzahl von Ausgängen A1,...,Am, die den zuvor erwähnten Eingängen zugeordnet sein mögen, eine Auswerteeinrichtung B angeschlossen, die ausgangsseitig mit einer Abnehmerleitung AL verbunden ist. Diese Abnehmerleitung ist für die Übertragung von Nachrichtenzellen vorgesehen, die den zuvor erwähnten, auf der Zubringerleitung ZL auftretenden Nachrichtenzellen entsprechen. Die Anzahl der Ausgänge entspricht dabei wieder dem Bitratenverhältnis der für die Abnehmerleitung festgelegten Übertragungsbitrate zu der für diese Ausgänge festgelegten Übertragungsbitrate unter Berücksichtigung der genannten Zusatzinformationen.

Die auf der Zubringerleitung ZL auftretenden Nachrichtenzellen, die n unterschiedlichen virtuellen Verbindungen zugeordnet sein mögen, werden innerhalb der Behandlungseinrichtung A zunächst in einen "First-In-First-Out"-Speichers FIFO1 eingefügt. Die in Nachrichtenzellen einer virtuellen Verbindung enthaltenden Nachrichtensignale werden anschließend in Signalabschnitte unterteilt und in neu gebildete Nachrichtenzellen eingefügt, die durch einen entsprechenden Zellenkopf einer festgelegten virtuellen Verbindung des ATM-Netzes zugeordnet sind und in einer nachfolgend noch zu erläuternder Weise auf die genannten Eingänge El bis Em des ATM-Netzes verteilt werden.

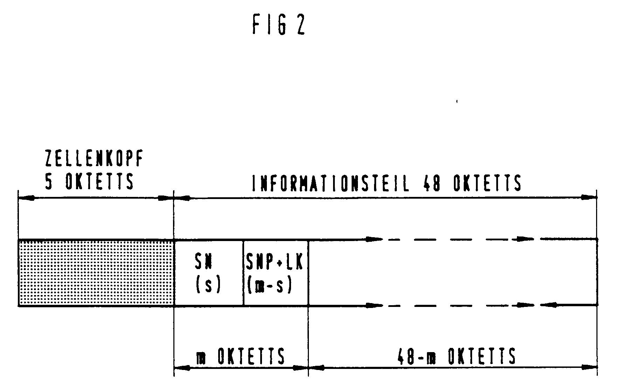

Die genannten Signalabschnitte sind dabei hinsichtlich ihrer Bitanzahl so festgelegt, daß diese jeweils zuzüglich einer festgelegten Anzahl von Informationsbits in dem Informationsteil einer Nachrichtenzelle übertragbar sind. Eine solche Nachrichtenzelle ist in FIG 2 schematisch dargestellt. Danach besteht eine solche beispielsweise aus 53 Oktetts, wobei die ersten fünf Oktetts in bekannter Weise einen Zellenkopf ("Header") bilden, welcher sämtliche für die Übertragung der jeweiligen Nachrichtenzelle über das ATM-Netz erforderlichen Steuersignale enthält. An diesen Zellenkopf schließt sich der aus 48 Oktetts bestehende Informationsteil der Nachrichtenzelle an. m Oktetts bilden dabei die bereits erwähnten Informationsbits. s dieser m Oktetts sind bei dem Ausführungsbeispiel für die Übertragung einer noch zu erläuternden Signalabschnitt-Folgenummer SN, die verbleibenden Oktetts, d.h. (m - s) Oktetts, dagegen für die Übertragung einer Prüfinformation SNP für die Signalabschnitt-Folgenummer sowie eines Längekennzeichens LK für in dem Informationsteil als Nutzoktetts belegte Oktetts vorgesehen. Die (48 - m) Oktetts des Informationsteiles sind schließlich für die Aufnahme eines zuvor erwähnten Signalabschnittes vorgesehen.

Für die Bildung von neuen Nachrichtenzellen ist jeder der n virtuellen Verbindungen auf der Zubringerleitung ZL eine gesonderte Umpaketiereinrichtung zugeordnet. In FIG 1 sind die n Umpaketiereinrichtungen mit SUP1 bis SUPn bezeichnet. Die jeweilige Umpaketiereinrichtung erhält dabei von dem "First-In-First-Out"-Speicher FIFO1 her nach Maßgabe der Einschreibreihenfolge der einzelnen Nachrichtenzellen nacheinander Nachrichtenzellen zugeführt, die zunächst depaketiert werden. Aus der Folge der in diesen enthaltenen Nachrichtensignale werden anschließend die genannten Signalabschnitte gebildet. Diese werden nacheinander in Nachrichtenzellen der jeweiligen virtuellen Verbindung eingefügt. Dabei sind in den Informationsteil der jeweiligen Nachrichtenzelle eine von Nachrichtenzelle zu Nachrichtenzelle sich periodisch fortlaufend verändernde Signalabschnitt-Folgenummer, eine Prüfinformation sowie ein Längenkennzeichen eingetragen. Die Zählperiode für diese Signalabschnitt-Folgenummer ist entsprechend der maximalen Laufzeit einer Nachrichtenzelle durch das ATM-Netz festgelegt.

Die Ausgangsleitungen sämtlicher Umpaketiereinrichtungen (SUP1 bis SUPn) sind gemeinsam einer Sende-Puffereinrichtung SPU zugeführt, welche die auf den Ausgangsleitungen auftretenden Nachrichtenzellen an die Eingänge E1 bis Em des ATM-Netzes zyklisch verteilt.

Darüber hinaus werden durch die Sende-Puffereinrichtung SPU bei Auftreten von Übertragungspausen auf den Ausgangsleitungen der Umpaketiereinrichtungen sogenannte Leerzellen zu den in Frage kommenden Eingängen E1 bis Em des ATM-Netzes hin übertragen.

Die den Eingängen E1 bis Em von der Sende-Puffereinrichtung SPU her zugeführten Nachrichtenzellen werden über festgelegte Übertragungswege innerhalb des ATM-Netzes zu den in Figur 1 dargestellten Ausgängen A1 bis Am übertragen.

Die mit den Ausgängen A1 bis Am des ATM-Netzes verbundene, in Figur 1 dargestellte Auswerteeinrichtung B weist als Schnittstelle zu diesen Ausgängen eine Empfangs-PufferEinrichtung EPU auf, welche die über die einzelnen Ausgänge zugeführten, unterschiedlichen virtuellen Verbindungen zugehörigen Nachrichtenzellen an verbindungsindividuelle Umpaketiereinrichtungen weiterleitet. Entsprechend den n unterschiedlichen virtuellen Verbindungen sind diese in Figur 1 mit EUP1 bis EUPn bezeichnet. Für dieses Weiterleiten sind die Umpaketiereinrichtungen jeweils über eine Anschlußleitung mit der Empfangs-Puffereinrichtung EPU verbunden.

Die jeweilige Umpaketiereinrichtung depaketiert die über die zugehörige Anschlußleitung zugeführten Nachrichtenzellen und fügt die in diesen enthaltenen Signalabschnitte entsprechend der Signalabschnitt-Folgenummern aneinander.

Aus der Folge der aneinandergefügten Signalabschnitte werden durch die jeweilige Depaketiereinrichtung zunächst Nachrichtensignale gebildet, deren Bitanzahl derart festgelegt ist, daß diese jeweils der Anzahl der in dem Informationsteil einer Nachrichtenzelle als Nutzsignale übertragbaren Bits entspricht, d.h. also, daß die Nachrichtensignale bei dem in Figur 2 angegebenen Beispiel 48 Oktetts umfassen. Die Nachrichtensignale werden nacheinander in Nachrichtenzellen der jeweiligen virtuellen Verbindung eingefügt. Diese Nachrichtenzellen sind anschließend einem "First-In-First-Out"-Speicher FIFO2 zugeführt, der diese in der Reihenfolge des Einschreibens an die Abnehmerleitung AL weiterleitet.

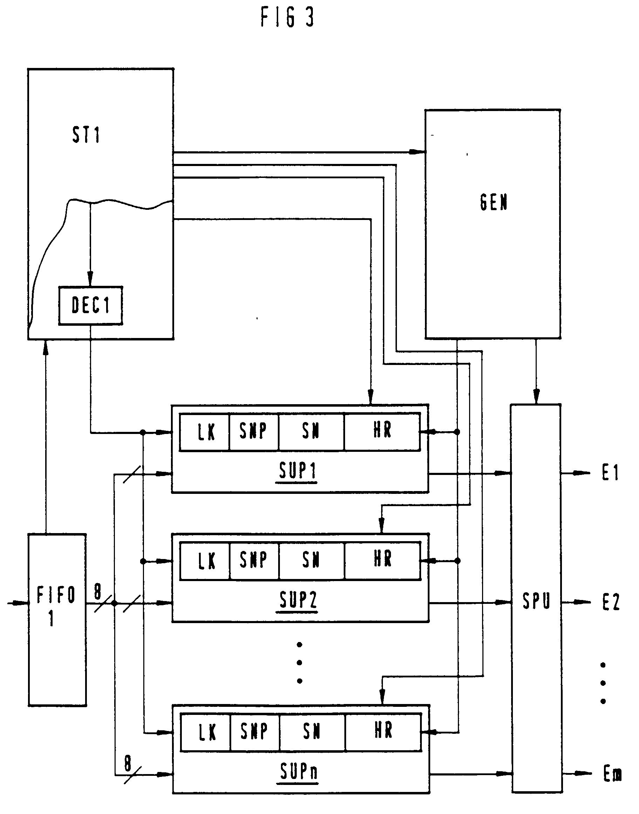

In Figur 3 ist die in Figur 1 angegebene Behandlungseinrichtung A detaillierter dargestellt. Danach ist der "First-In-First-Out"-Speicher FIFO1 über eine Steuerleitung oder einen Steuerleitungsbus mit einer Steuereinrichtung ST1 verbunden, welche von diesem First-In-First-Out"-Speicher die im Zellenkopf einer an dessen Ausgang gerade vorliegenden Nachrichtenzelle enthaltenen Verbindungsangaben zugeführt erhält. Nach Maßgabe dieser Verbindungsangaben wird unter der Steuerung eines Decodierers DEC1 der Steuereinrichtung die für die jeweilige virtuelle Verbindung in Frage kommende Umpaketiereinrichtung (SUP1,..., SUPn) angesteuert, um die jeweilige Nachrichtenzelle zu übernehmen. Die Umpaketiereinrichtungen sind dafür gemeinsam einerseits mit dem "First-In-First-Out"-Speicher FIFO1 und andererseits mit dem Decodierer DEC1 verbunden.

Für die Aufnahme von Nachrichtenzellen enthalten die Umpaketiereinrichtungen SUP1 bis SUPn jeweils einen Speicher. Darüber hinaus sind in diesen Umpaketiereinrichtungen jeweils vier Register vorgesehen. In ein erstes, mit SN bezeichnetes Register wird von der jeweiligen Umpaketiereinrichtung eine von Nachrichtenzelle zu Nachrichtenzelle sich fortlaufend verändernde Signalabschnitt-Folgenummer eingetragen. Ein zweites Register ist für die Aufnahme der zugehörigen Prüfinformation vorgesehen. Ein drittes, mit HR bezeichnetes Register dient für die Speicherung eines festgelegten, von der Steuereinrichtung ST1 her abgegebenen Zellenkopfes. Dieser Zellenkopf kann dabei je nach den Erfordernissen des ATM-Netzes identisch mit dem auf der Zubringerleitung ZL benutzten Zellenkopf sein bzw. von diesem abweichen. Für die Übernahme des von den einzelnen Umpaketiereinrichtungen zu benutzenden neuen Zellenkopfes sind diese jeweils über eine gesonderte Steuerleitung bzw. über einen gesonderten Steuerleitungsbus mit der Steuereinrichtung ST1 verbunden. Ein viertes der genannten Register, welches in Figur 3 mit LK bezeichnet ist, dient schließlich für die Aufnahme eines bereits oben erwähnten Längenkennzeichens.

Von den einzelnen Umpaketiereinrichtungen SUP1 bis SUPn werden die zugeführten Nachrichtenzellen depaketiert und die darin enthaltenen Nachrichtensignale nacheinander in den zugehörigen Speicher eingetragen . Aus diesen Nachrichtensignalen werden die oben erwähnten Signalabschnitte gebildet, denen jeweils die in den zugehörigen vier Registern gespeicherten Informationen entsprechend der Figur 2 vorangestellt werden. Für unmittelbar aufeinanderfolgende Signalabschnitte und damit neue Nachrichtenzellen wird dabei im Regelfalle ein Längenkennzeichen benutzt, welches bei dem in Figur 3 angenommenen Beispiel den 48 - m Oktetts des Informationsteiles einer Nachrichtenzelle entspricht. Es kann jedoch auch der Fall eintreten, daß durch Übertragungspausen im Zuge der jeweiligen virtuellen Verbindung auf der Zubringerleitung ZL für eine bestimmte Zeit lediglich Teile eines Signalabschnittes in dem zugehörigen Speicher gespeichert sind. Liegt dieser Zustand für eine festgelegte Zeit vor, so werden die vorliegenden Teile eines Signalabschnittes in eine Nachrichtenzelle eingefügt, wobei die dafür erforderliche Anzahl von Oktetts in dem zugehörigen Informationsteil durch ein entsprechendes Längenkennzeichen angegeben ist.

Die Bildung von neuen Nachrichtenzellen in den einzelnen Umpaketiereinrichtungen SUP1 bis SUPn erfolgt im übrigen unter der Steuerung eines Steuersignal-Generators GEN, der dafür über eine an eine Steuerleitung bzw. einen Steuerleitungsbus mit den Umpaketiereinrichtungen in Verbindung steht.

Die Ausgänge der Umpaketiereinrichtungen SUP1 bis SUPn sind mit Eingängen der Sende-Puffereinrichtung SPU verbunden, die unter der Steuerung des Steuersignal-Generators GEN die ihr zugeführten Nachrichtenzellen zyklisch auf die Eingänge E1 bis Em des ATM-Netzes verteilt.

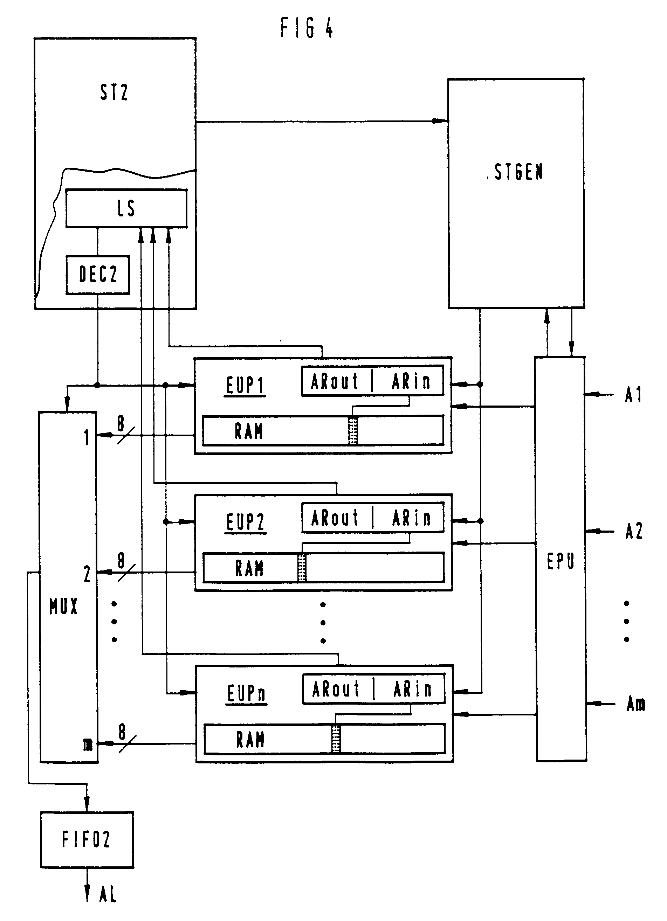

In Figur 4 ist die in Figur 1 angegebene Auswerteeinrichtung B detallierter dargestellt. Die Empfangs-Puffereinrichtung EPU erhält die über die Ausgänge A1 bis Am des ATM-Netzes übertragenen Nachrichtenzellen zugeführt. Diese Nachrichtenzellen werden nach einer Überprüfung der in diesen jeweils enthaltenen Signalabschnitt-Folgenummer anhand der zugehörigen Prüfinformation nach Maßgabe der in den Zellenköpfen dieser Nachrichtenzellen jeweils enthaltenen Verbindungsangaben an die verbindungsindividuellen Umpaketierteinrichtungen EUP1 bis EUPn weitergeleitet. Dies kann beispielsweise dadurch geschehen, daß die Empfangs-Puffereinrichtung EPU die Verbindungsangaben der jeweiligen Nachrichtenzelle zu einem Steuersignal-Generator STGEN hin überträgt, der nach Maßgabe dieser Verbindungsangaben die in Frage kommende Umpaketiereinrichtung über eine für sämtliche Umpaketiereinrichtungen gemeinsame Steuerleitung bzw. Steuerbusanordnung für die Aufnahme der jeweiligen Nachrichtenzelle freigibt.

In den Umpaketiereinrichtungen erfolgt jeweils zunächst eine Depaketierung der Nachrichtenzellen, wobei die in diesen enthaltenen Signalabschnitte in Speicherplätze eines der jeweiligen Umpaketiereinrichtung zugehörigen Schreib-Lese-Speichers RAM eingetragen werden. Als Speicheradresse für den jeweiligen Signalabschnitt wird dabei die diesem zugehörige Signalabschnitt-Folgenummer benutzt, welche in ein Schreibadressen-Register ARin der jeweiligen Umpakektiereinrichtung eingetragen wird.

Im übrigen werden in die einzelnen Speicherplätze des Schreib-Lese-Speichers RAM auch die den Signalabschnitten zugehörigen Längenkennzeichen eingetragen.

Durch die jeweilige Umpaketiereinrichtung (EUP1 bis EUPn) werden aus den in dem zugehörigen Schreib-Lese-Speicher RAM gespeicherten Signalabschnitten unter Berücksichtigung der mit diesen gespeicherten Längenkennzeichen aufeinanderfolgende Nachrichtensignale in der oben angegebenen Größe gebildet, die nacheinander in Nachrichtenzellen der jeweiligen virtuellen Verbindung eingefügt werden. Der für diese Nachrichtenzellen erforderliche Zellenkopf ist dabei in der jeweiligen Umpaketiereinrichtung gespeichert. Darüber hinaus ist die Anfangsadresse innerhalb des Schreib-Lese-Speichers RAM für die Bildung von in eine Nachrichtenzelle gerade einzufügenden Nachrichtensignalen in einem Leseadressen-Register ARout der jeweiligen Umpaketiereinrichtung festgehalten. Diese Anfangsadresse wird mit jeder Bildung einer Nachrichtenzelle aktualisiert.

Bei Vorliegen einer Nachrichtenzelle, die beispielsweise in einem Ausgangsregister der jeweiligen Umpaketiereinrichtung zwischengespeichert sein möge, gibt die jeweilige Umpaketiereinrichtung ein Meldesignal an eine Lesesteuerung LS einer Steuereinrichtung ST2 ab. Auf ein solches Meldesignal hin steuert ein mit der Lesesteuerung LS verbundener Decodierer DEC2 die jeweilige Umpaketiereinrichtung für die Abgabe der gerade vorliegenden Nachrichtenzelle an. Die Ausgänge der Umpaketiereinrichtungen EUP1 bis EUPn sind dabei mit Eingängen eines Multiplexers Mux verbunden, der ebenfalls von dem Decodierer DEC2 gesteuert ist und über den die einzelnen abgegebenen Nachrichtenzellen dem "First-In-First-Out"-Speicher FIFO2 zugeführt sind. Von hier aus erfolgt dann eine Weiterleitung der Nachrichtenzellen an die Abnehmerleitung AL, und zwar unter Berücksichtigung der Einschreibreihenfolge dieser Nachrichtenzellen.

## Patentansprüche

1. Verfahren zum Übertragen von im Zuge wenigstens einer virtuellen Verbindung mit einer ersten Übertragungsbitrate auftretenden Nachrichtenzellen, welche jeweils aus einem Zellenkopf mit einer Kennzeichnung der jeweiligen virtuellen Verbindung und einem Informationsteil gebildet sind, über ein nach einem asynchronen Transfermodus (ATM) arbeitendes und eine Mehrzahl von Eingängen und Ausgängen aufweisendes ATM-Netz mit wenigstens einer ATM-Kommunikationseinrichtung, wobei die Eingänge und Ausgänge jeweils für die Aufnahme bzw. Abgabe von Nachrichtenzellen mit einer gegenüber der ersten Übertragungsbitrate niedrigeren zweiten Übertragungsbitrate ausgelegt sind,
**dadurch gekennzeichnet,**
daß die der jeweiligen virtuellen Verbindung zugehörigen Nachrichtenzellen depaketiert werden,
daß die in den Nachrichtenzellen enthaltenen Nachrichtensignale in aufeinanderfolgende Signalabschnitte unterteilt werden, deren jeweilige Bitanzahl derart einheitlich festgelegt ist, daß diese zuzüglich einer festgelegten Anzahl von Informationsbits der Anzahl der in dem Informationsteil einer Nachrichtenzelle als Nutzsignale übertragbaren Bits entspricht,
daß die Signalabschnitte nacheinander in die Informationsteile von Nachrichtenzellen eingefügt und in die Informationsteile als Informationsbits dabei eine sich fortlaufend verändernde Signalabschnitt-Folgenummer eingetragen wird, daß die Nachrichtenzellen nacheinander auf eine dem Bitratenverhältnis der ersten zur zweiten Übertragungsbitrate entsprechende Anzahl von Eingängen (E1 bis Em) des ATM-Netzes verteilt und über die betreffenden Eingänge zu diesen zugeordneten Ausgängen (A1 bis Am) des ATM-Netzes hin übertragen werden,
daß den an den betreffenden Ausgängen auftretenden Nachrichtenzellen der in diesen jeweils enthaltene Signalabschnitt sowie die diesem zugehörige Signalabschnitt-Folgenummer entnommen werden,
daß aus der Folge der Signalabschnitte für die jeweilige virtuelle Verbindung Nachrichtensignale gebildet werden, deren Bitanzahl derart festgelegt ist, daß diese jeweils der Anzahl der in dem Informationsteil einer Nachrichtenzelle als Nutzsignale übertragbaren Bits entspricht,
und daß die Nachrichtensignale anschließend nacheinander in die jeweilige virtuelle Verbindung bezeichnende Nachrichtenzellen eingefügt werden, welche mit der ersten Übertragungsbitrate weitergeleitet werden.

2. Verfahren nach Anspruch 1,
**dadurch gekennzeichnet,**
daß in die Informationsteile der Nachrichtenzellen jeweils als Informationsbits neben einer Signalabschnitt-Folgenummer eine für deren Überprüfung auf eine fehlerfreie Übertragung dienende Prüfinformation sowie ein Längenkennzeichen für die Länge des in dem jeweiligen Informationsteil enthaltenen Signalabschnittes eingetragen werden.

3. Schaltungsanordnung zur Durchführung des Verfahrens nach Anspruch 1 mit einem wenigstens eine ATM-Kommunikationseinrichtung (KE) aufweisenden ATM-Netz, welches mit wenigstens einer Zubringerleitung (ZL), über die Nachrichtenzellen wenigstens einer virtuellen Verbindung mit einer ersten Übertragungsbitrate übertragbar sind, und mit wenigstens einer Abnehmerleitung (AL) für die Weiterleitung von Nachrichtenzellen mit der ersten Übertragungsbitrate verbunden ist
und welches über interne Eingänge (E1 bis EP) und Ausgänge (A1 bis AP) verfügt, welche für die Aufnahme bzw. Abgabe von Nachrichtensignalen in Form von einen Zellenkopf und einen Informationsteil enthaltenden Nachrichtenzellen mit einer gegenüber der ersten Übertragungsbitrate niedrigeren Übertragungsbitrate ausgelegt sind,
**dadurch gekennzeichnet,**
daß wenigstens eine Behandlungseinrichtung (A) vorgesehen ist, welche einerseits mit der jeweiligen Zubringerleitung (ZL) und andererseits mit einer dem Bitratenverhältnis der ersten zur zweiten Übertragungsbitrate entsprechenden Anzahl von internen Eingängen (E1 bis Em) des ATM-Netzes verbunden ist,
daß die jeweilige Behandlungseinrichtung über den virtuellen Verbindungen individuell zugeordnete Umpaketiereinrichtungen (SUP1,..., SUPn) verfügt, welchen jeweils die Nachrichtenzellen der zugehörigen virtuellen Verbindung zugeführt sind,
daß die jeweilige Umpaketiereinrichtung dabei die Nachrichtenzellen depaketiert und aus der Folge der in den zugehörigen Informationsteilen enthaltenen Nachrichtensignale Signalabschnitte bildet, die jeweils zusammen mit einer von Signalabschnitt zu Signalabschnitt sich ändernden Signalabschnitt-Folgenummer in den Informationsteil einer Nachrichtenzelle eingefügt und diese Nachrichtenzellen auf die betreffenden internen Eingänge (E1 bis Em) des ATM-Netzes in einer festgelegten Reihenfolge verteilt sind, daß wenigstens eine Auswerteeinrichtung (B) vorgesehen ist, welche einerseits mit der jeweiligen Abnehmerleitung (AL) und andererseits mit einer dem betreffenden Bitratenverhältnis entsprechenden, der genannten Anzahl von internen Eingängen zugeordneten Anzahl von internen Ausgängen (A1 bis Am) des ATM-Netzes verbunden ist,
daß die Auswerteeinrichtung (B) mit den betreffenden internen Ausgängen verbundene verbindungsindividuelle Umpaketiereinrichtungen (EUP1,..., EUPn) aufweist,
daß die jeweilige Umpaketiereinrichtung den über die internen Ausgänge (A1 bis Am) zugeführten Nachrichtenzellen der jeweiligen virtuellen Verbindung jeweils den darin enthaltenen Signalabschnitt sowie die Signalabschnitt-Folgenummer entnimmt und den jeweiligen Signalabschnitt zunächst in einen Schreib-/Lese-Speicher (RAM) unter einer der zugehörigen Signalabschnitt-Folgenummer entsprechenden Schreibadresse zwischenspeichert,
und daß durch die jeweilige Umpaketiereinrichtung (EUP1,..., EUPn) aus der Folge der in dem zugehörigen Schreib/-Lese-Speicher (RAM) gespeicherten Signalabschnitte Nachrichtensignale gebildet sind, welche in die Informationsteile von an die jeweilige Abnehmerleitung (AL) weitergeleitete Nachrichtenzellen der jeweiligen virtuellen Verbindung eingefügt sind.

## Claims

1. Method for the transmission of message cells which appear in the course of at least one virtual circuit at a first transmission bit rate and are each formed by a cell header having an identifier of the respective virtual circuit and an information part, via an ATM network with at least one ATM communications device, which ATM network operates according to an asynchronous transfer mode (ATM) and has a plurality of inputs and outputs, the inputs and outputs each being designed for the input and output, respectively, of message cells at a second transmission bit rate, which is lower than the first transmission bit rate,
characterized
in that the message cells associated with the respective virtual circuit are depacketized,
in that the message signals contained in the message cells are subdivided into successive signal sections whose respective number of bits is uniformly defined such that the said number, plus a defined number of information bits, corresponds to the number of bits which can be transmitted in the information part of a message cell as useful signals,
in that the signal sections are successively inserted into the information parts of message cells and a continually changing signal section sequence number is at the same time entered into the information parts as information bits,
in that the message cells are successively distributed between a number of inputs (E1 to Em) of the ATM network that corresponds to the bit rate ratio of the first transmission bit rate to the second transmission bit rate, and are transmitted via the relevant inputs towards outputs (A1 to Am) of the ATM network that are assigned to the said inputs,
in that the signal section respectively contained in the message cells appearing at the relevant outputs as well as the signal section sequence number associated therewith are removed from the said message cells appearing at the relevant outputs,
in that message signals are formed from the sequence of signal sections for the respective virtual circuit, the number of bits of which message signals is defined such that the said number in each case corresponds to the number of bits which can be transmitted in the information part of a message cell as useful signals,
and in that the message signals are subsequently successively inserted into message cells that designate the respective virtual circuit and are forwarded at the first transmission bit rate.

2. Method according to Claim 1,
characterized
in that there are entered into the information parts of the message cells as respective information bits, in addition to a signal section sequence number, a check information item serving for checking thereof for error-free transmission as well as a vent identifier for the length of the signal section contained in the respective information part.

3. Circuit arrangement for carrying out the method according to Claim 1, having an ATM network which has at least one ATM communications device (KE) and is connected to at least one offering trunk (ZL), via which message cells of at least one virtual circuit can be transmitted at a first transmission bit rate, and to at least one serving trunk (AL) for forwarding message cells at the first transmission bit rate,
and which network has internal inputs (E1 to EP) and outputs (A1 to AP), which are designed for the input and output, respectively, of message signals in the form of message cells, containing a cell header and an information part, at a transmission bit rate which is lower than the first transmission bit rate,
characterized
in that provision is made of at least one handling device (A), which is connected, on the one hand, to the respective offering trunk (ZL) and, on the other hand, to a number of internal inputs (E1 to Em) of the ATM network that corresponds to the bit rate ratio of the first transmission bit rate to the second transmission bit rate,
in that the respective handling device has repacketizing devices (SUP1,..., SUPn) which are individually assigned to the virtual circuits and to which the message cells of the associated virtual circuit are respectively fed,
in that the respective repacketizing device in this case depacketizes the message cells and forms signal sections from the sequence of message signals contained in the associated information parts, which signal sections are each inserted, together with a signal section sequence number which varies from signal section to signal section, into the information part of a message cell, and these message cells are distributed between the relevant internal inputs (E1 to Em) of the ATM network in a defined order,
in that provision is made of at least one evaluation device (B), which is connected, on the one hand, to the respective serving trunk (AL) and, on the other hand, to a number of internal outputs (A1 to Am) of the ATM network that corresponds to the relevant bit rate ratio and is assigned to the said number of internal inputs, in that the evaluation device (B) has circuit-specific repacketizing devices (EUP1,..., EUPn), which are connected to the relevant internal outputs,
in that the respective repacketizing device removes from the message cells of the respective virtual circuit, which message cells are fed in via the internal outputs (A1 to Am), in each case the signal section contained therein as well as the signal section sequence number and buffer-stores the respective signal section firstly in a random-access memory (RAM) under a write address corresponding to the associated signal section sequence number,
and in that message signals are formed by the respective repacketizing device (EUP1,..., EUPn) from the sequence of signal sections stored in the associated random-access memory (RAM), which message signals are inserted into the information parts of message cells of the respective virtual circuit which are forwarded to the respective serving trunk (AL).

## Revendications

1. Procédé de transmission de cellules d'information, qui arrivent au cours d'au moins une communication virtuelle avec un premier débit binaire de transmission et qui sont formées chacune d'un en-tête ayant un indicateur de la communication virtuelle considérée et d'un champ d'information, par l'intermédiaire d'un réseau ATM fonctionnant selon un mode de transfert asynchrone (ATM), comportant une multiplicité d'entrées et de sorties et ayant au moins un système de communication ATM, les entrées et les sorties étant conçues respectivement pour la réception et l'émission de cellules d'information avec un deuxième débit binaire de transmission inférieur au premier débit binaire de transmission,
caractérisé par le fait que
on dépaquette les cellules d'information associées à la communication virtuelle considérée,
on subdivise les signaux d'information contenus dans les cellules d'information en sections de signaux successives dont le nombre de bits est fixé uniformément de telle sorte que ce nombre additionné à un nombre fixé de bits d'information correspond au nombre des bits pouvant être transmis comme signaux utiles dans le champ d'information d'une cellule d'information,
on insère successivement les sections de signaux dans les champs d'information de cellules d'information et on enregistre alors comme bits d'information dans les champs d'information un numéro de séquence de section de signal variant en continu,
on répartit successivement les cellules d'information sur un nombre, correspondant au rapport du premier débit binaire de transmission et du deuxième débit binaire de transmission, d'entrées (E1 à Em) du réseau ATM et on les transmet par l'intermédiaire des entrées concernées à ces sorties associées (A1 à Am) du réseau ATM,
on extrait des cellules d'information arrivant sur les sorties concernées la section de signal contenue à chaque fois dans ces cellules d'information et le numéro de séquence de section de signal associé à cette section de signal,
on forme, à partir de la séquence des sections de signaux, des signaux d'information pour la communication virtuelle considérée, dont le nombre de bits est fixé de telle sorte qu'il correspond à chaque fois au nombre des bits pouvant être transmis comme signaux utiles dans le champ d'information d'une cellule d'information,
et on insère ensuite successivement les signaux d'information dans les cellules d'information qui caractérisent la communication virtuelle considérée et qui sont retransmises avec le premier débit binaire de transmission.

2. Procédé selon la revendication 1,
caractérisé par le fait que
on enregistre à chaque fois dans les champs d'information des cellules d'information, comme bits d'information, en plus d'un numéro de séquence de section de signal, une information de contrôle servant au contrôle de celui-ci en vue d'une transmission sans erreur et un indicateur de longueur pour la longueur de la section de signal contenue dans le champ d'information considéré.

3. Circuit pour la mise en oeuvre du procédé selon la revendication 1 comprenant un réseau ATM, qui comporte au moins un système de communication ATM (KE), qui est relié à au moins une ligne entrante (ZL), par l'intermédiaire de laquelle des cellules d'information d'au moins une communication virtuelle peuvent être transmises avec un premier débit binaire de transmission, et à au moins une ligne sortante (AL) pour la retransmission de cellules d'information avec le premier débit binaire de transmission, et
qui dispose d'entrées internes (E1 à Ep) et de sorties internes (A1 à Ap) qui sont conçues pour la réception et l'émission de signaux d'information sous forme de cellules d'information, contenant un en-tête et un champ d'information, avec un débit binaire de transmission inférieur au premier débit binaire de transmission,
caractérisé par le fait que
il est prévu au moins un dispositif de traitement (A) qui est relié d'une part à la ligne entrante (ZL) considérée et d'autre part à un nombre, correspondant au rapport du premier débit binaire de transmission et du deuxième débit binaire de transmission, d'entrées internes (E1 à Em) du réseau ATM,
le dispositif de traitement considéré dispose de dispositifs de conversion de paquets (SUP1, ..., SUPn) qui sont associés individuellement à des communications virtuelles et auxquels sont envoyées à chaque fois les cellules d'information de la communication virtuelle associée,
le dispositif de conversion de paquets considéré dépaquette les cellules d'information et forme, à partir de la séquence des signaux d'information contenus dans les champs d'information associés, des sections de signaux qui sont insérées à chaque fois, conjointement à un numéro de séquence de section de signal variant de section de signal en section de signal, dans le champ d'information d'une cellule d'information et ces cellules d'information sont réparties dans un ordre fixé sur les entrées internes (E1 à Em) concernées du réseau ATM,
il est prévu au moins un dispositif d'exploitation (B) qui est relié d'une part à la ligne sortante (AL) considérée et d'autre part à un nombre, correspondant au rapport des débits binaires de transmission et associé au nombre mentionné d'entrées internes, de sorties internes (A1 à Am) du réseau ATM,
le dispositif d'exploitation (B) comporte des dispositifs de conversion de paquets (EUP1, ..., EUPn) propres aux communications virtuelles et reliés aux sorties internes,
le dispositif de conversion de paquets considéré extrait des cellules d'information, envoyées par l'intermédiaire des sorties internes (A1 à Am), de la communication virtuelle considérée à chaque fois la section de signal contenue dans ces cellules d'information et le numéro de séquence de section de signal et il mémorise temporairement la section de signal considérée d'abord dans une mémoire vive (RAM) sous une adresse d'écriture correspondant au numéro de séquence de section de signal associé,
et le dispositif de conversion de paquets considéré (EUP1, ..., EUPn) forme, à partir de la séquence des sections de signaux mémorisées dans la mémoire vive associée (RAM), des signaux d'information qui sont insérés dans les champs d'information de cellules d'information, retransmises à la ligne sortante (AL) considérée, de la communication virtuelle considérée.
